(19) **Europäisches Patentamt**
**European Patent Office**
**Office européen des brevets**

(11) **EP 3 659 797 A1**

(12) **EUROPEAN PATENT APPLICATION**

(43) Date of publication:
**03.06.2020 Bulletin 2020/23**

(51) Int Cl.:
**B32B 7/12** (2006.01)    **C08G 18/48** (2006.01)
**C08G 18/66** (2006.01)    **C08G 18/75** (2006.01)
**C08G 18/10** (2006.01)    **C08G 18/32** (2006.01)
**C09J 175/08** (2006.01)

(21) Application number: **18209129.8**

(22) Date of filing: **29.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Henkel AG & Co. KGaA**
**40589 Düsseldorf (DE)**

(72) Inventors:
• **Blodau, Marcel**
  **47807 Krefeld (DE)**
• **Krlejova, Andrea**
  **40476 Düsseldorf (DE)**
• **Meyer, Daniela**
  **50171 Kerpen (DE)**
• **Franken, Marcel**
  **51067 Köln (DE)**

(54) **POLYURETHANE ADHESIVE HAVING HIGH CHEMICAL RESISTANCE**

(57)    The present invention relates to a polyether having a urethane group density of from 1 to 10 urethane groups per mol of polyether, a polyurethane (PU) adhesive that comprises the polyether and at least one NCO-terminated compound, and to the use of the polyurethane adhesive for producing packaging, in particular food packaging.

EP 3 659 797 A1

**Description**

The present invention relates to a polyether having a urethane group density of from 1 to 10 urethane groups per mol of polyether, a polyurethane (PU) adhesive that comprises the polyether and at least one NCO-terminated compound, and to the use of the polyurethane adhesive for producing packaging, in particular food packaging.

Polyurethane adhesives have a range of applications, in particular in the production of flexible packaging as is used in general in the field of food packaging. In particular in cases where high requirements are placed on the composite materials, polyester-based polyurethane adhesives are no longer inconceivable. In addition to being subjected to high levels of chemical and thermal stress, adhesives that are used for producing food packaging have to also comply with a range of regionally different food regulatory specifications which are specified for example by the US Food and Drug Administration (FDA) or that are set out in the European regulation on plastics materials EC10/2011.

In addition to the restrictions that result from the statutory regulations, the mechanical stresses caused by the weight of the packaged food must be taken into account, the materials used in addition being attacked by the packaged food itself or the ingredients thereof. As a result, producing stable packaging in the field of animal food for example, in particular wet food, is associated with significant difficulties owing to the aggressive nature of the ingredients and the quantities to be packaged.

US 5,096,980 describes polyurethane/adhesive compositions that result in excellent adhesion behavior with respect to the contents to be packaged or encased, and with respect to boiling water. The claimed composition comprises an organic polyisocyanate, a polyol, 0.01 to 10 wt.% of an oxoacid of phosphorus or of a derivative thereof, and 9.91 to 20 wt.% of a carboxylic acid or an anhydride thereof, and 0.1 to 50 wt.% of an epoxy resin.

EP 1 983 011 relates to a method for preparing a lamination adhesive for shrink-wrap products, in which a mixture comprising 50 to 98 wt.% of a hydroxy-terminated polyester having a hydroxyl value of from 50 to 350 and a hydroxyl functionality of from 2 to 3, and 1 to 30 wt.% of an epoxy resin having an epoxy equivalent weight of from 500 to 4000, and 1 to 20 wt.% of an organic alkoxysilane containing $C_1$-$C_4$-alkoxy groups, is prepared, and said mixture is heated at a temperature of from 100 to 150°C until the epoxy resin has substantially completely dissolved. Subsequently, the $C_1$-$C_4$-alcohol is evaporated at a pressure of less than 13 kPa to a $C_1$-$C_4$-alcohol residual content of less than 0.4 wt.% in order to prepare a first component, and a second component is provided that contains a multifunctional isocyanate having an isocyanate functionality of from 1.8 to 4, the second component being present in a molar ratio of the NCO/OH groups of from 0.9:1 to 3:1, relative to the first component. In view of the current food regulatory stipulations, the use of epoxy resins in packaging intended for food is to be viewed critically, as at least some of said compounds harbor health risks.

WO 2006/026670 discloses adhesive agents for high-temperature laminates that comprise at least one polyester urethane having at least two isocyanate groups, the polyester urethane being obtained by reacting one or more hydroxyl-functional polyesters 1 with aliphatic diisocyanates, and reaction with one or more hydroxyl-functional polyesters 2, the polyester 1 having a number average molecular weight $M_n$ in the range of from 3000 to 7000 g/mol, the polyester 2 having a number average molecular weight $M_n$ in the range of from 700 to 2000 g/mol, and the aliphatic diisocyanates having a number average molecular weight $M_n$ of from 110 to 300 g/mol, and one or more branched hydroxyl-functional polyesters having a number average molecular weight $M_n$ in the range of from 1000 to 3500 g/mol.

In order to be able to meet the strict requirements placed on the mechanical properties and the adhesive effect of the adhesive, polyurethane adhesives based on polyester polyols are generally used. Said adhesives are disadvantageous, however, in that they form "migratable" compounds in part, such as cyclic esters, which compounds cannot be prevented from migrating into the packaged food. Said migratable compounds are problematic insofar as they have potential for being harmful to health, at least in part.

The object of the present invention is therefore that of providing an adhesive composition that is free of migratable compounds of this kind and at the same time withstand the high mechanical, chemical and thermal stresses encountered in the field of food packaging.

It has surprisingly been found that this object is achieved by an adhesive composition based on polyurethanes, in which a polyester is used that comprises at least one urethane group per mol of polyether. The present invention therefore relates firstly to a polyether having a urethane group density of from 1 to 10, preferably 2 to 5, urethane groups per mol of polyether.

Within the meaning of the present invention, a urethane unit is to be understood as a repeat unit in the polymer having the chemical structure -NH-(CO)-O-. In this case, the number of urethane units can be determined theoretically using the following formula:

$$\frac{n_{Isocyanat}}{100\,g} = \frac{w_{Isocyanat} \cdot \%NCO}{M_{NCO} \cdot 100\%}$$

This mole fraction of isocyanate in a 100 g batch can be used to determine the number of urethane units in a composition.

$$U\left(\frac{mol}{kg}\right) = \frac{n_{Isocyanat} \cdot 1000\,g}{100g \cdot kg}$$

It has surprisingly been found that, when the number of urethane units is in the range indicated, polyethers are obtained, the use of which in adhesive compositions leads to compositions being obtained that achieve good adhesion which can be maintained even after lengthy storage and sterilization. In a preferred embodiment, the polyether according to the invention is prepared by reacting a polyol with an isocyanate component.

No further requirements are made of the isocyanate component. However, it has been found to be particularly advantageous for an aliphatic isocyanate component to be used as the isocyanate component for preparing the polyether according to the invention. In a preferred embodiment, the isocyanate component is therefore selected from the group consisting of isophorone diisocyanate (IPDI), hexamethylene diisocyanate (HDI), diisocyanatodicyclohexylmethane (H12MDI), xylylene diisocyanate (XDI), tetramethyl xylylene diisocyanate (TMXDI), pentamethylene diisocyanate (PDI) and derivatives and mixtures of said compounds. In a particularly preferred embodiment, the isocyanate component is isophorone diisocyanate (IPDI) and/or hexamethylene diisocyanate (HDI).

In a further preferred embodiment, the polyol used for preparing the polyether according to the invention is synthesized from monomers selected from the group consisting of ethylene glycol, diethylene glycol, 1,2-propanediol, 1,3-propanediol, 1,2-butanediol, 1,3-butanediol, 1,4-butanediol and mixtures thereof. In a preferred embodiment, the polyether is a diglycol.

In a preferred embodiment, the polyether has a hydroxyl value of no more than 260 mg KOH/g. An embodiment is preferred in particular in which the polyether has a hydroxyl value of from 1 to 260 mg KOH/g, preferably 5 to 120 mg KOH/g, particularly preferably 10 to 50 KOH/g. Within the meaning of the present invention, the hydroxyl value (OH value) is a measure for the content of hydroxyl groups in the polyether and is specified as the amount of potassium hydroxide, in milligrams, that is equal to the amount of acetic acid bound during acetylation of one gram of substance.

In a preferred embodiment, the polyether according to the invention is obtained from a reaction mixture that comprises 1 to 20 wt.%, preferably 5 to 10 wt.%, of a polyol, and 1 to 50 wt.%, preferably 20 to 40 wt.%, of an isocyanate component, the specifications in weight percent being based in each case on the total weight of the solvent-free reaction mixture.

It has surprisingly been found that the use of the polyether according to the invention leads to adhesive compounds that are characterized by a very good adhesive effect and a high hydrolysis resistance. The present invention therefore further relates to the use of the polyether according to the invention in an adhesive composition.

The present invention further relates to an adhesive composition that comprises

a) at least one polyether having a urethane group density of from 1 to 10, preferably 2 to 5, urethane groups per mol of polyether, and
b) at least one NCO-terminated compound.

It is known that polyether urethanes exhibit only unsatisfactory or no adhesion to aluminum or aluminum-containing alloys. Within the context of the present invention, it has surprisingly been found that a very good adhesive effect can be achieved using the adhesive composition according to the invention, even when using different materials, such as aluminum alloys.

In a preferred embodiment of the adhesive composition according to the invention, the addition ratio of the at least one NCO-terminated compound to the at least one polyether, expressed as NCO:OH, is from 1.0:1 to 8.0:1, preferably 1.1:1 to 4.0:1.

It has surprisingly been found that it is possible, using the adhesive composition according to the invention and without using polyester polyols, to obtain composite systems that are usually achieved only using polyester polyols. A preferred embodiment is therefore one in which the adhesive composition according to the invention does not contain any polyester polyols. In a particularly preferred embodiment, the fraction of polyester polyols in the adhesive composition according to the invention is less than 0.1 wt.%, preferably less than 0.01 wt.%, based in each case on the total weight of the solvent-free adhesive composition.

In order to be suitable for use as an adhesive in the field of food packaging, the composition used should comprise as few constituents as possible that are potentially harmful to health. When using conventional compositions, there may be a danger that residues of isocyanate monomers remain in the cured adhesive compositions, which monomers are considered harmful to health in part. The presence of monomeric isocyanates has not been observed in the adhesive composition according to the invention. A preferred embodiment is therefore one in which the adhesive composition has a content of monomeric NCO-compounds of less than 10 wt.%, preferably from 0.01 to 1 wt.%, more preferably 0.01 to 0.1 wt.%, and particularly preferably less than 0.1 wt.%, based in each case on the overall weight of the solvent-free adhesive composition. Furthermore, when cured, the adhesive composition according to the invention has a content of monomeric NCO-compounds of less than 1 wt.%, preferably less than 0.01 wt.%, based in each case on the total weight of the cured adhesive composition.

In a preferred embodiment, the content of the at least one polyester in the adhesive composition according to the invention is from 1 to 40 wt.%, preferably 2 to 15 wt.%, based in each case on the total weight of the solvent-free adhesive composition.

According to a preferred embodiment of the present invention, the fraction of the at least one NCO-terminated compound in the adhesive composition according to the invention is from 1 to 50 wt.%, preferably 20 to 40 wt.%, based in each case on the total weight of the solvent-free adhesive composition.

The NCO-terminated compound is preferably a polyisocyanate. Polyisocyanates are aromatic, aliphatic or cycloaliphatic isocyanates. The polyisocyanate is preferably selected from the group consisting of 1,5-naphthyl diisocyanate, 2,4- or 4,4'-diphenylmethane diisocyanate (MDI) and mixtures of said isomers, hydrated MDI (H12MDI), xylylene diisocyanate (XDI), tetramethyl xylylene diisocyanate (TMXDI), tetraalkylene diphenylmethane diisocyanate, 4,4'-dibenzyl diisocyanate, 1,3- or 1,4-phenylene diisocyanate, the isomers of toluene diisocyanate (TDI), 1-methyl-2,4-diisocyanato-cyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane (IPDI), phosphorus- or halogen-containing diisocyanates, tetramethoxybutane 1,4-diisocyanate, butane 1,4-diisocyanate, 1,6-hexane diisocyanate (HDI), dicylcohexylmethandiisocyanate, 1,4-cyclohexane diisocyanate, ethylene diisocyanate, methylene triphenyl triisocyanate (MIT), 1,4-diisocyanatobutane, 1,12-diisocyanatododecane and dimer fatty acid diisocyanate. Polyfunctional isocyanates can also be used, as result from trimerization or oligomerization of diisocyanates or by reacting diisocyanates with polyfunctional hydroxyl- or amino group-containing compounds. Diisocyanates and the oligomers thereof are preferably used.

In a particularly preferred embodiment, the NCO-terminated compound is selected from the group consisting of xylylene diisocyanate, pentamethylene diisocyanate, hexamethylene diisocyanate, 1-isocyanatomethyl-3-isocyanato-1,5,5-trimethylcyclohexane (IPDI), and polymers and oligomers of said compounds, derivatives and mixtures of said compounds.

The adhesive composition according to the invention preferably furthermore comprises an adhesion promoter, the adhesion promoter preferably being contained in an amount of up to 20 wt.%, particularly preferably 1 to 10 wt.%, based in each case on the total weight of the solvent-free composition. The adhesion promoter is preferably selected from alkoxylated silanes and the organofunctional derivatives thereof. Particularly preferably, the adhesion promoter is selected from methoxylated and ethoxylated silanes and mixtures thereof. It has surprisingly been found that adding the selected adhesion agent makes it possible to achieve an adhesive composition that has high adhesion, even in the presence of fillers in the food packaging that have high demands.

The adhesive composition according to the invention is characterized in that it does not comprise any migratable cyclic compounds and is therefore particularly suitable for producing packaging in the food industry. In a preferred, the adhesive composition according to the invention is substantially free of critical migratable cycles. In a further preferred embodiment, the content of critical migratable cycles in the adhesive composition according to the invention is less than 1 wt.%, preferably less than 0.1 wt.%, particularly preferably less than 0.01 wt.%, based in each case on the total weight of the solvent-free adhesive composition or on the total weight of the cured adhesive composition. In a particularly preferred embodiment, the adhesive composition according to the invention is free of critical migratable cycles even after curing.

The adhesive composition according to the invention can be used both as a one-component (1K) system and as a two-component (2K) system. In a preferred embodiment, the adhesive composition according to the invention is therefore a 2K system. In an alternative preferred embodiment, the adhesive composition according to the invention is a 1K system.

The adhesive composition according to the invention is suitable in particular for adhesively bonding foil-like substrates in the field of food packaging. A preferred embodiment is therefore one in which the adhesive composition according to the invention is a laminating adhesive. In this case, the adhesive composition may be provided containing solvents or solvent-free, or in the form of a dispersion.

In a preferred embodiment, the adhesive composition according to the invention may furthermore comprise a catalyst, preferably in an amount of from 0 to 10 wt.%, particularly preferably 0.5 to 3 wt.%, based in each case on the total weight of the solvent-free adhesive composition. In a further preferred embodiment, the adhesive composition according to the invention is free of metal compounds. Metal compounds are often used in conventional systems as catalysts, but should be avoided in the field of food packaging owing to the health concerns associated with said compounds. A preferred embodiment is therefore one in which the catalyst, if present, is an amine compound, preferably having at least an OH functionality. In this case, suitable compounds are for example diemethylaminoethanol (DMEA), 2-(diethylamino)ethanol (2-DEEA) or derivatives of said compounds, N-methylaminoethanol or methyl diethanol.

The present invention further relates to a method for adhesively bonding substrates, using the adhesive composition according to the invention. In this case, the method according to the invention comprises the following steps:

i) applying an adhesive composition according to the present invention to at least one substrate;
ii) bringing the coated substrate into contact with a further substrate; and
iii) curing the applied adhesive composition,

the adhesive composition being cured at a temperature of from 40 to 85°C, preferably 55 to 65°C.

In a preferred embodiment, the substrates are brought into contact under additional pressure.

The adhesive composition according to the invention is suitable in particular for adhesively bonding flexible substrates. In this case, within the context of the present application, flexible substrates are to be understood as those substrates which have a certain amount of resiliency and pliancy, such as foils, sheets or plates. In a preferred embodiment, the substrates are foil-like substrates, in particular plastics or metal foils. In an alternative embodiment, the substrates are plastics or metal sheets, in particular aluminum sheets.

Adhesively bonding flexible substrates is a matter of routine for a person skilled in the art, and is a long-established method. However, adhesively bonding thick flexible substrates, in particular thick metal foils such as aluminum foils, is still challenging. These are precisely the materials, however, that are used in the field of food packaging. Within the context of the present invention, it has surprisingly been found that the method according to the invention, in combination with the adhesive composition according to the invention, is suitable in particular for adhesively bonding thick metal foils, such as are used in producing wet food packaging. A preferred embodiment is therefore one in which the at least one substrate is an aluminum foil, preferably having a thickness of from 5 to 240 $\mu$m, particularly preferably 40 to 180 $\mu$m. In a preferred embodiment, the aluminum foil may furthermore be a foil made of an aluminum alloy.

The present invention further relates to a composite system that comprises the adhesive composition according to the invention or that can be obtained by means of the method according to the invention.

The composite system according to the invention is characterized, after curing of the adhesive composition, by high adhesion, even after sterilization. A preferred embodiment is therefore one in which the composite system has an adhesion, after 7 days and sterilization at 131°C for 45 minutes, of from 3 to 19 N/15 mm, preferably 5 to 15 N/15 mm, particularly preferably 5 to 10 N/15 mm.

The composite system is preferably packaging, particularly food packaging, in particular packaging for animal food. It has surprisingly been found that the composite system according to the invention can be used as packaging for animal food, which places particular demands on the systems used owing to the aggressive contents. The present invention further relates to the use of the adhesive composition according to the invention for producing packaging, preferably food packaging, in particular packaging for animal food, most particularly wet animal food.

The present invention further relates to the use of the adhesive composition according to the invention for adhesively bonding foil-like substrates. At least one of the substrates to be adhesively bonded is preferably an aluminum foil, preferably having a thickness of from 5 to 240 $\mu$m, particularly preferably 40 to 180 $\mu$m.

The present invention will be explained in more detail with reference to the following examples, said examples not being intended to be considered to limit the inventive concept.

Examples:

Examples of polyethers according to the invention were prepared from a reaction mixture containing PPG 400, PPG 1100 isophorone diisocyanate and ethylene glycol (Example 1). The polyether according to the invention according to Example 2 was obtained from a reaction mixture additionally comprising 2-(diethylamino)ethanol as a catalyst.

The polyethers obtained were in each case reacted with an NCO-terminated compound to form a laminating adhesive. For this purpose, a film-forming addition ratio NCO/OH of 2.32 was selected. The reactive adhesive mixture obtained was diluted with ethyl acetate to a solids content of 33.3%.

The substrates to be coated were formatted to A4 size. A carrier foil consisting of aluminum was coated with 6 g/m$^2$ of the reactive adhesive mixture and placed on a pre-composite. The carrier foil thus coated was subsequently dried for 5 minutes, at 90°C, in a drying cabinet. The composites thus prepared were cured under pressure (weight 8 kg) between metal plates, at 60°C, in a drying cabinet.

The laminates obtained were tested for practicability. For this purpose, tension tests were carried out and the laminates underwent sterilization.

The results are summarized in Table 1. A mixture of IPDI trimers, IPDI and a methoxysilane was used as the NCO-terminated compound.

Table 1: Adhesion after 7 days

| Test | Polyether | Aluminum foil [$\mu$m] | Curing temp. [°C] | VH* [N/15 mm] |
|------|-----------|------------------------|-------------------|---------------|
| 2-1 | 1 | 12 | 40 | 2.2 |
| 2-2 | 1 | 80 | 40 | 9.7 |
| 2-3 | 1 | 90 | 40 | 9.1 |
| 2-4 | 1 | 12 | 60 | 2.8 |
| 2-5 | 1 | 80 | 60 | 4.8 |
| 2-6 | 1 | 90 | 60 | 6.9 |
| 2-7 | 2 | 80 | 60 | 13.1 |
| 2-8 | 2 | 90 | 60 | 12.6 |

Table 2: Adhesion after 7 days and sterilization at 131°C for 45 minutes

| Test | Polyether | Aluminum foil [$\mu$m] | Curing temp. [°C] | VH* [N/15 mm] |
|------|-----------|------------------------|-------------------|---------------|
| 3-1 | 1 | 12 | 40 | 6.1 |
| 3-2 | 1 | 80 | 40 | 6.5 |
| 3-3 | 1 | 90 | 40 | 5.9 |
| 3-4 | 1 | 12 | 60 | 9.4 |
| 3-5 | 1 | 80 | 60 | 12.4 |
| 3-6 | 1 | 90 | 60 | 8.8 |
| 3-7 | 2 | 80 | 60 | 8.9 |
| 3-8 | 2 | 90 | 60 | 11.3 |

Table 3: Adhesion after 7 days and sterilization at 131°C for 30 minutes together with a filler, a mixture of fatty acid derivatives and starch being used as the filler.

| Test | Polyether | Aluminum foil [$\mu$m] | Curing temp. [°C] | VH* [N/15 mm] |
|------|-----------|------------------------|-------------------|---------------|
| 4-1 | 1 | 12 | 40 | 4.0 |
| 4-2 | 1 | 80 | 40 | 1.8 |
| 4-3 | 1 | 90 | 40 | 4.0 |
| 4-4 | 1 | 12 | 60 | 8.1 |
| 4-5 | 1 | 80 | 60 | 10.1 |
| 4-6 | 1 | 90 | 60 | 8.5 |
| 4-7 | 2 | 80 | 60 | 6.5 |
| 4-8 | 2 | 90 | 60 | 7.8 |
| *) Adhesion | | | | |

As can be seen from the data in the above tables, it is possible, using the adhesive composition according to the invention, to prepare composite systems that maintain their adhesion even after sterilization and in the case of storage in the presence of an aggressive filler.

**Claims**

1. Polyether having a urethane group density of from 1 to 10, preferably 2 to 5, urethane groups per mol of polyether.

2. Polyether according to claim 1, **characterized in that** the polyether is prepared by reacting a polyol with an isocyanate component.

3. Polyether according to either or both of claim 1 or claim 2, **characterized in that** the isocyanate component is selected from the group consisting of isophorone diisocyanate (IPDI), hexamethylene diisocyanate (HDI), diisocyanatodicyclohexylmethane (H12MDI), xylylene diisocyanate (XDI), tetramethyl xylylene diisocyanate (TMXDI), pentamethylene diisocyanate (PDI) and derivatives and mixtures of said compounds.

4. Polyether according to one or more of the preceding claims, **characterized in that** the polyol is synthesized from monomers selected from the group consisting of ethylene glycol, diethylene glycol, 1,2-propanediol, 1,3-propanediol, 1,2-butanediol, 1,3-butanediol, 1,4-butanediol and mixtures thereof.

5. Use of a polyether according to one or more of claims 1 to 4 in adhesive compositions, preferably 2K adhesive compositions.

6. Adhesive composition comprising

    a) at least one polyether according to one or more of claims 1 to 4, and
    b) at least one NCO-terminated compound.

7. Adhesive composition according to claim 6, **characterized in that** the addition ratio of the at least one NCO-terminated compound to the at least one polyether, expressed as NCO:OH, is from 1.0:1 to 8.0:1, preferably 1.1:1 to 4.0:1.

8. Adhesive composition according to at least one of the preceding claims, **characterized in that** the adhesive has a content of monomeric NCO-terminated compound of less than 10.0wt.%, preferably from 0.01 to 1 wt.%, more preferably 0.01 to 0.1 wt.%, and particularly preferably less than 0.1 wt.%, based in each case on the overall weight of the adhesive.

9. Adhesive composition according to at least one of the preceding claims, **characterized in that** the adhesive is substantially free of critical migratable cycles.

10. Method for adhesively bonding at least two substrates, comprising the steps of:

    i) applying an adhesive composition according to at least one of claims 1 to 9 to at least one substrate;
    ii) bringing the coated substrate into contact with a further substrate; and
    iii) curing the polyurethane adhesive,

    **characterized in that** the adhesive is cured at a temperature of from 40 to 85°C, preferably 55 to 65°C.

11. Method according to claim 10, **characterized in that** the substrates are foil-like substrates.

12. Method according to either claim 10 or claim 11, **characterized in that** the at least one substrate is an aluminum foil, preferably having a thickness of from 5 to 240 $\mu$m, particularly preferably 40 to 180 $\mu$m.

13. Composite system comprising a polyurethane adhesive according to at least one of claims 1 to 9 or obtainable according to a method according to any of claims 10 to 12.

14. Use of an adhesive composition according to at least one of claims 1 to 9 for producing packaging, preferably food packaging, in particular packaging for animal food.

15. Use of an adhesive composition according to at least one of claims 1 to 9 for adhesively bonding foil-like substrates.

Europäisches
Patentamt

European
Patent Office

Office européen
des brevets

# EUROPEAN SEARCH REPORT

**Application Number**

EP 18 20 9129

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2008 060885 A1 (HENKEL AG & CO KGAA [DE]) 10 June 2010 (2010-06-10) * paragraphs [0001], [0010] - [0013], [0017], [0041] - [0047]; claims; examples 3, 6 * | 1-15 | INV. B32B7/12 C08G18/48 C08G18/66 C08G18/75 C08G18/10 C08G18/32 C09J175/08 |
| X | WO 2018/140116 A1 (DOW GLOBAL TECHNOLOGIES LLC [US]) 2 August 2018 (2018-08-02) | 1-7, 10-15 | |
| A | * page 1, paragraph 8-13 * * page 5, lines 6-10, 15-20; example IE1 * | 8,9 | |
| X | WO 2017/217199 A1 (HENKEL AG & CO KGAA [DE]) 21 December 2017 (2017-12-21) | 1-7, 13-15 | |
| A | * paragraphs [0002], [0010], [0019], [0034], [0076]; example 1 * | 8,10-12 | |
| X | US 2005/020706 A1 (KOLLBACH GUIDO [DE] ET AL) 27 January 2005 (2005-01-27) | 1-5, 10-12, 14,15 | |
| A | * paragraphs [0001], [0013], [0027] - [0035], [0106]; claims; examples * | 6-9,13 | |

**TECHNICAL FIELDS SEARCHED (IPC)**

B32B
C08G
C09J

The present search report has been drawn up for all claims

| Place of search | Date of completion of the search | Examiner |
|---|---|---|
| Munich | 23 May 2019 | Eigner, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 20 9129

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2019

| Patent document cited in search report | Publication date | Patent family member(s) | | Publication date |
|---|---|---|---|---|
| DE 102008060885 A1 | 10-06-2010 | DE | 102008060885 A1 | 10-06-2010 |
| | | EP | 2356165 A1 | 17-08-2011 |
| | | US | 2012021227 A1 | 26-01-2012 |
| | | WO | 2010066525 A1 | 17-06-2010 |
| WO 2018140116 A1 | 02-08-2018 | TW | 201827551 A | 01-08-2018 |
| | | WO | 2018140116 A1 | 02-08-2018 |
| WO 2017217199 A1 | 21-12-2017 | BR | 112018017103 A2 | 15-01-2019 |
| | | CN | 108779379 A | 09-11-2018 |
| | | EP | 3469033 A1 | 17-04-2019 |
| | | JP | 2017222746 A | 21-12-2017 |
| | | KR | 20190018132 A | 21-02-2019 |
| | | TW | 201816057 A | 01-05-2018 |
| | | US | 2019085223 A1 | 21-03-2019 |
| | | WO | 2017217199 A1 | 21-12-2017 |
| US 2005020706 A1 | 27-01-2005 | AU | 2002358740 A1 | 30-06-2003 |
| | | BR | 0215060 A | 23-11-2004 |
| | | CA | 2471252 A1 | 26-06-2003 |
| | | CN | 1604926 A | 06-04-2005 |
| | | DE | 10259248 A1 | 10-07-2003 |
| | | EP | 1456265 A1 | 15-09-2004 |
| | | HU | 0402474 A2 | 29-03-2005 |
| | | JP | 2005511873 A | 28-04-2005 |
| | | KR | 20040068953 A | 02-08-2004 |
| | | MX | PA04005750 A | 10-09-2004 |
| | | US | 2005020706 A1 | 27-01-2005 |
| | | WO | 03051951 A1 | 26-06-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5096980 A
- EP 1983011 A
- WO 2006026670 A